# EUROPEAN PATENT APPLICATION

(11) **EP 0 815 744 A1**
(43) Date of publication of application: **07.01.1998**
(21) Application number: 97201928.5
(22) Date of filing: 24.06.1997
(51) Int. Cl.: A23L 1/36, A23P 1/08

(54) **coated snack products and method for preparing such coated snack products**

(30) Priority: 25.06.1996 NL 1003420
(71) Applicant: Sara Lee/DE N.V., 3532 AA Utrecht (NL)
(72) Inventor: Kreuning, Johannes, 1212 BC Hilversum (NL); Plantinga, Willem Johan, 3992 BD Houten (NL)
(74) Representative: Smulders, Theodorus A.H.J., Ir.

(57) **Abstract**

The invention relates to a deep-fried snack product based on nuts, comprising a core material coated, by means of battering, with a dough material, on which one or more particles are provided, wherein of each particle a part sits in the layer of dough and a part projects therefrom, as well as to a method for preparing such snack product by providing core material with at least one coating layer by means of battering, followed by providing particles on the layer that is still wet, and then deep-frying the coated core material with layer of dough and particles.

## Description

The invention relates to deep-fried coated snack products, comprising one or more nuts as core material and a coating provided on the outside of the snack product.

All types of snack products on the basis of nuts and the like are known. These products are prepared by providing on the nuts an expandable or non-expandable coating usually made of a dough material. Through heating, for instance deep-frying in oil, the definitive product or, if still further processings are required, a semi-finished product is obtained. Such products usually consist of a core of (for instance) peanuts and a covering of one or more layers of dough, while, if so desired, fragrances, colorants and/or flavorings, such as salt, herbs, aromatic substances and the like, can further be provided in the dough.

It has also already been proposed to include pieces of starch product, such as wafer or rice, into the dough of the coating of nuts. It has also already been proposed to provide seeds, such as sesame seed or poppy seed, on the outer surface of the coating, by means of a bonding layer. However, this is a particularly laborious method, which has a high price-increasing effect. Moreover, the adhesion of the particles (seeds) is often insufficient.

The object of the invention is to provide such deep-fried snack product, with particles on the surface thereof.

The invention relates to a deep-fried snack product based on nuts, comprising a core material coated, by means of battering, with a dough material on which one or more particles are provided, wherein of each particle a part sits in the layer of dough and a part projects therefrom.

The snack products according to the invention are based on a core material consisting of nuts which may or may not be deep-fried. The nuts can be selected from the nuts suitable for snacks, such as peanuts, cashew nuts, hazelnuts, almonds, walnuts, pistachio nuts, pecan nuts, macadamia nuts, pine seeds, Brazil nuts, as well as combinations of two or more thereof.

For this, one can use whole nuts or agglomerated systems, for instance such as described in EP-A 7130, or a core material consisting of deep-fried or non-deep-fried, reduced nuts, shaped, for instance compressed, into a coherent particle. Preferably, the reduced nuts are shaped by means of a pasta press, molding roller, tabletting machine or a compacting roller. In this connection, reduced nuts means that particles smaller than half nuts are involved.

The shape of the particles can then be selected fairly freely, while it is in fact only important that the parts are and remain coherent during the removal from the shaping apparatus, during further treatment, such as coating and deep-frying, and during storage.

The core material is provided with at least one coating layer of a dough material. The coating layers may or may not be expanded, depending on the desired structure of the snack.

According to the invention, most preference is given to using a core having a substantially non-expanded coating, a completely expanded coating or a coating with different degree of expansion.

The nature of the various coating materials (dough material) should be adapted to the adhesion of the coating to the core material and other product properties, such as desired degree of expansion. For obtaining a highly expandable dough material, preference is generally given to starch, for instance pregelatinized waxy maize flour, native waxy maize flour (waxy maize) and pregelatinized sticky rice flour. The choice of the quantity of these expandable types of starch depends on the desired surface structure, the desired size and the desired texture of the final products. The dough material of a non-expanding layer preferably substantially consists of non-expanding products, such as wheat flour, rice flour or other types of flour.

The dough material can contain fragrances, flavorings and colorants. These are generally natural aromatic substances, herbs and salt, as well as natural colorants. It is also possible to include a quantity of sugar into one or both layers. The quantities of such components completely depend on the desired color and taste. It is observed that it is possible to apply an outer hydrocolloid layer that contains no colorant, or a layer that does contain a colorant, but is still transparent, or to apply a layer that contains colorant in such an amount or of such a type that it is no longer transparent.

As colorants, fragrances and flavorings, substances are used that are allowed in foodstuffs. Examples of colorants are coloring extracts of spices or food products, coloring food products and the like. Specific use can be made of paprika and curcuma.

The snack product has its outside provided with particles that are partly provided in the layer of dough and partly project therefrom. By including each particle partly into the layer of dough, a particularly effective adhesion of the particle .to the core is obtained, without requiring a separate bonding layer. It has been found that in practice, this can only be effected in an economical and proper manner by applying the layer of dough through battering, and sprinkling the particles onto the layer of dough that is still wet. The particles, for instance reduced nuts, seeds, sprinkling flours and breadings, adhere to the wet dough and the whole can then be deep-fried. In this manner, a snack product is produced that is entirely new in structure, nature and design.

As particles, any type of edible particle can be used that can be available in the desired fineness, i.e. smaller than about 2.5 mm. Also, it should be resistant to deep-frying. Examples of such particles are small nut parts, such as reduced nuts, peanut parts, seeds such as sesame seed and poppy seed, sprinkling flours, breadings and the like. As nuts that can be used as particles on the surface, the same types of nuts are applicable as in the core material.

The invention also relates to a method for preparing such snack product consisting of a nut or agglomerated nuts as core material, and a coating layer. This method comprises providing core material with at least one coating layer by means of battering, followed by providing particles on the layer that is still wet, whereupon the coated core material with layer of dough and particles is deep-fried.

According to the invention, providing the coating layer on the particles of the core material is effected through battering.

In practice, battering means that the particles are passed through a 'curtain' of a thinly liquid dough, for instance over a conveyor belt or a comparable device. The principle of this method is inter alia described in WO-A 93/15619.

The batter used for battering is thinly liquid and resembles pancake batter or batter for apple fritters. It substantially consists of water, wheat flour, possibly other starches or flours, and fragrances, colorants and flavorings. The nature and quantity of the components of a batter depend on the desired properties of the snack, but also on the adhesion of the batter on the core material, the pumpability and the stability of the batter. Batters are commercially available, consisting of a substantially dry mixture of the components. Then, by mixing the batter with water, the batter to be used eventually is obtained. The water content may vary within wide limits. Suitable limits are 45-75 wt.%.

Surprisingly, it has been found that in particular when the particles are provided in the batter that is still wet, a good to very good adhesion is obtained in the case that the dough material is expanding. A very slight expansion, for instance more than 1 vol.%, is already sufficient for an excellent adhesion.

After the core material has been coated with one or more layers of dough and the particles have been provided on the layer of dough that is still wet, further drying takes place, if necessary, and the product is finally heated.

The manner of heating may depend on the available temperature, but will generally take place in oil. Suitable temperatures for heating lie at the common temperatures for deep-frying or baking dough materials and will generally be chosen between 125 and 200°C. For deep-frying, a value of 150-175°C is for instance preferred.

It is observed that the deep-fried particles can further be after-treated with oil, fragrances, flavorings, herbs and/or spices.

Hereinafter, the invention will be explained on the basis of an example.

### Example 1

1800 g of peanuts were provided with a layer of dough by means of a commercially available standard batter, on the basis of wheat flour, maize flour, starch, salt, egg powder, sugar and the like, mixed to a water content of about 65 wt.%. Peanut parts were sprinkled onto the particles that were still wet. After this, the particles were deep-fried.

### Example 2

The method of example 1 was repeated, the difference being that instead of peanut parts, sesame seed was used.

Both in the product of example 1 and in that of example 2, it was observed that the adhesion of the particles to the surface was excellent. Only a small part of the particles was knocked off from the surface during transport and storage.

## Claims

1. A deep-fried snack product based on nuts, comprising a core material coated, by means of battering, with a dough material, on which one or more particles are provided, wherein of each particle a part sits in the layer of dough and a part projects therefrom.

2. A snack product according to claim 1, wherein the core material consists of nuts, or agglomerated parts of nuts, possibly in combination with one or more auxiliary substances.

3. A snack product according to claim 1 or 2, wherein the nuts in the core are selected from the group consisting of peanuts, cashew nuts, hazelnuts, almonds, walnuts, pistachio nuts, pecan nuts, macadamia nuts, pine seeds, Brazil nuts, as well as combinations of two or more thereof.

4. A snack product according to claims 1-3, wherein said particles are selected from the group consisting of seeds, sprinkling flours, breadings and parts of nuts.

5. A snack product according to claim 4, wherein said particles are selected from peanut parts, sprinkling flours, breadings, sesame seed and/or poppy seed.

6. A method for preparing a particle-shaped snack product according to claims 1-5, wherein core material is provided, by means of battering, with at least one coating layer, after which particles are provided on the layer that is still wet, whereupon the coated core material with layer of dough and particles is deep-fried.
